# EUROPÄISCHE PATENTSCHRIFT

(11) **EP 3 808 227 B1**
(45) Veröffentlichungstag und Bekanntmachung des Hinweises auf die Patenterteilung: **24.01.2024**
(21) Anmeldenummer: 20199650.1
(22) Anmeldetag: 01.10.2020
(51) Int. Cl.: A47G 19/02, A47G 19/22, G06K 19/077

(54) **VERFAHREN ZUM VERBINDEN EINES GESCHIRRTEILS MIT EINEM INFORMATIONSTRÄGER UND VORRICHTUNG MIT EINEM GESCHIRRTEIL UND EINEM INFORMATIONSTRÄGER**
METHOD FOR CONNECTING A CONTAINER SECTION TO AN INFORMATION CARRIER AND DEVICE COMPRISING A CONTAINER SECTION AND AN INFORMATION CARRIER
PROCÉDÉ DE RELIER UN ARTICLE DE VAISSELLE À UN SUPPORT D'INFORMATIONS ET DISPOSITIF DOTÉ D'UN ARTICLE DE VAISSELLE ET D'UN SUPPORT D'INFORMATIONS

(30) Priorität: 17.10.2019 DE 102019128088
(43) Veröffentlichungstag der Anmeldung: 21.04.2021
(73) Patentinhaber: Rastal GmbH & Co. KG, 56203 Höhr-Grenzhausen (DE)
(72) Erfinder: Kehrein, Carsten, 56070 Koblenz (DE); Nieraad, Thomas, 65719 Hofheim (DE)
(74) Vertreter: WSL Patentanwälte Partnerschaft mbB

(56) Entgegenhaltungen:
- EP-A1- 2 264 652
- WO-A1-2018/104241
- US-A1- 2007 141 760
- US-B2- 8 298 873

## Beschreibung

Die vorliegende Erfindung betrifft ein Verfahren zum Verbinden eines Geschirrteils mit einem berührungslos auslesbaren elektronischen Informationsträger nach Anspruch 1.

Darüber hinaus betrifft die vorliegende Erfindung eine Vorrichtung mit einem Geschirrteil nach Anspruch 14.

Aus dem Stand der Technik sind auf eine selbstklebende Trägerfolie aufgebrachte berührungslos auslesbare elektronische Informationsträger, insbesondere in Form von RFID-Transpondern, bekannt. Diese können auch auf ein Geschirrteil zur Identifizierung desselben aufgeklebt werden. Allerdings weist eine derartige Lösung weder die häufig erwünschte Spülmaschinenbeständigkeit, noch einen wirksamen Schutz vor Manipulationen auf. Zudem genügt dieser Stand der Technik nicht den ästhetischen Ansprüchen an Gläser für den Ausschank von Markengetränken.

Ferner ist aus der EP 3 552 153 A1 ein Verfahren zum Verbinden eines berührungslos auslesbaren Informationsträgers mit einem Geschirrteil gemäß dem Oberbegriff des Anspruchs 1 bekannt. Bei diesem Verfahren wird ein Rahmen urr den auf das Geschirrteil aufgebrachten Informationsträger aufgebracht, so dass der Informationsträger mit einer Deckschicht aus einer Druckfarbe überdeckt werden kann.

Aus der US 2007/0141760 A1 sind ein elektrisches Bauelement und ein Verfahren zu seiner Herstellung bekannt, bei denen ein Chip oder ein anderes elektrisches Bauteil in ein Substrat eingebettet ist. Das Substrat kann ein thermoplastisches Material sein, das in der Lage ist, sich um den Chip herum zu verformen und den Chip zumindest teilweise zu umschließen, wenn Wärme und/oder Druck auf das Substrat ausgeübt wird.

Das Patent US 8,2898,873 B2 offenbart ein Verfahren zur Herstellung eines Schaltungssubstrats, bei dem das Schaltungssubstrat unter Verwendung einer Schaltungssubstratplatte in Form einer Folie hergestellt wird, die eine ungehärtete Schicht enthält, von der ein Teil, der nicht der Teil ist auf dem ein Schaltungschip angeordnet ist, vor oder nach der Anordnung des Schaltungschips selektiv härtbar ist, wobei die ungehärtete Schicht eine Weichheit aufweist, die das Einbetten des Schaltungschips in die Schaltungssubstratplatte durch Drücken des Schaltungschips in eine Oberfläche der ungehärteten Schicht ermöglicht.

Aus der EP 2 264 652 A1 ist ferner ein reversibles wärmeempfindliches Aufzeichnungsmedium mit einer reversiblen wärmeempfindlichen Aufzeichnungsschicht, einer ersten folienförmigen Basis, die angrenzend an die reversible wärmeempfindliche Aufzeichnungsschicht vorgesehen ist, einem elektronischen Informationsaufzeichnungsmodul, das ein Modulsubstrat und ein konvex geformtes elektronisches Informationsaufzeichnungselement und eine Antennenschaltung enthält, die beide auf dem Modulsubstrat angeordnet sind, und einer ersten Harzschicht zum Verbinden der ersten folienförmigen Basis und des elektronischen Informationsaufzeichnungselements bekannt. Demgegenüber ist es Aufgabe der vorliegenden Erfindung, ein Verfahren zum Verbinden eines Geschirrteils mit einem berührungslos auslesbaren elektronischen Informationsträger, eine Vorrichtung mit einem Geschirrteil und einem daran befestigten Informationsträger sowie eine Bedruckvorrichtung bereitzustellen, die es ermöglichen, das Verbinden des Informationsträgers mit dem Geschirrteil effizienter auszuführen.

Zumindest eine der zuvor genannten Aufgaben wird durch ein Verfahren zum Verbinden eines Geschirrteils mit einem berührungslos auslesbaren elektronischen Informationsträger gelöst, welches die Schritte aufweist: Bereitstellen des Geschirrteils, wobei das Geschirrteil aus einem Material besteht, dass ausgewählt wird aus einer Gruppe bestehend aus Glas, Keramik und Kunststoff oder einer Kombination davon, Aufbringen einer Trägerschicht auf eine Oberfläche des Geschirrteils, Aufbringen des Informationsträgers auf eine der Oberfläche des Geschirrteils abgewandte Oberfläche der Trägerschicht, wobei eine Grundfläche des Informationsträgers kleiner ist als eine Fläche der Trägerschicht , und Aufbringen einer Deckschicht aus Druckfarbe derart, dass die Deckschicht eine der Trägerschicht abgewandte Oberfläche des Informationsträgers und die Oberfläche der Trägerschicht zumindest abschnittsweise bedeckt, wobei die Trägerschicht ein plastisch verformbares Material umfasst, wobei das Aufbringen des Informationsträgers auf die Trägerschicht ein Eindrücken des Informationsträgers in die Trägerschicht umfasst und wobei eine Fläche der Deckschicht größer ist als die Fläche der Trägerschicht, sodass sich die Deckschicht über den gesamten Umfang der Trägerschicht hinweg über die Trägerschicht hinaus auf die Oberfläche des Geschirrteils erstreckt.

Die grundlegende Idee des erfindungsgemäßen Verfahrens ist es, den Informationsträger auf einer auf das Geschirrteil aufgebrachten Trägerschicht anzuordnen und dann den Informationsträger in diese Trägerschicht einzudrücken, sodass eine bedruckbare Oberfläche aus einer der Trägerschicht abgewandten Oberfläche des Informationsträgers und einer Oberfläche der Trägerschicht gebildet wird, auf welche in herkömmlicher Weise die Deckschicht aus Druckfarbe aufgebracht werden kann.

In einer Ausführungsform der Erfindung setzt das Aufbringen der Deckschicht aus Druckfarbe eine Oberfläche mit einer hinreichend geringen Strukturtiefe voraus. Eine solche geringe Strukturtiefe der zu überdeckenden Oberfläche wird in einer Ausführungsform durch die Kombination aus dem elastisch verformbaren Material der Trägerschicht und der der Trägerschicht abgewandten Oberfläche des Informationsträgers bereitgestellt.

In einer Ausführungsform der Erfindung bilden nach dem Eindrücken des Informationsträgers in die Trägerschicht die der Oberfläche der Trägerschicht abgewandte Oberfläche des Informationsträgers und die Oberfläche der Trägerschicht zusammen eine geschlossene Oberfläche mit einer Rauheit, wobei die Rauheit das Aufbringen der Deckschicht ermöglicht.

In einer Ausführungsform der Erfindung besteht die Trägerschicht aus dem plastisch verformbaren Material. In einer Ausführungsform ist das plastisch verformbare Material der Trägerschicht ein plastisch verformbarer Kunststoff, insbesondere ein Thermoplast.

In einer Ausführungsform der Erfindung umfasst die Trägerschicht ein klebendes Material, vorzugsweise ein selbstklebendes Material. Auf diese Weise kann beim Aufbringen des Informationsträgers auf die Trägerschicht dieser vor dem Eindrücken auf die Trägerschicht aufgelegt werden ohne dass er gegenüber Trägerschicht verrutscht. Eine zusätzliche Klebung, beispielsweise durch Anordnen einer selbstklebenden Folie auf dem Informationsträger ist möglich, aber nicht unbedingt notwendig.

In einer Ausführungsform der Erfindung ist eine Dicke der Trägerschicht vor dem Aufbringen des Informationsträgers mindestens so groß wie, vorzugsweise größer als eine maximale Dicke des Informationsträgers. Diese Ausgestaltung der Trägerschicht gewährleistet, dass die Oberfläche der Trägerschicht neben dem Informationsträger nach dem Eindrücken des Informationsträgers in die Trägerschicht und die der Oberfläche der Trägerschicht abgewandte Oberfläche des Informationsträgers eine niveaugleiche Fläche bilden. Dabei wird als maximale Dicke des Informationsträgers die Dicke des Informationsträgers mit der größten Ausdehnung verstanden.

In einer Ausführungsform der Erfindung weist der Informationsträger zwei Längsseiten und zwei Querseiten auf, wobei der Informationsträger nach dem Eindrücken des Informationsträgers in die Trägerschicht entlang der Längsseiten und der Querseiten vollständig von dem Material der Trägerschicht umgeben ist. Auf diese Weise wird eine vollständige Einbettung des Informationsträgers in das Material Trägerschicht gewährleistet.

In einer weiteren Ausführungsform der Erfindung erfolgt das Aufbringen der Trägerschicht durch Aufdrucken, insbesondere in Siebdrucktechnik.

Die Trägerschicht dient in einer Ausführungsform auch dazu, den Informationsträger bei einem Befestigen an einem durchsichtigen Geschirrteil, beispielsweise einem Trinkgefäß aus Glas, für einen Betrachter, welcher durch den Abschnitt des Geschirrteils hindurchschaut, auf welchem der elektronische Informationsträger angebracht ist, zu verbergen.

Die Deckschicht aus Druckfarbe, welche sich zumindest abschnittsweise sowohl über der Oberfläche des Informationsträgers selbst als auch über die Oberfläche der Trägerschicht erstreckt, bewirkt eine zumindest abschnittsweise dauerhafte Versiegelung des Informationsträgers auf dem Geschirrteil. In Abhängigkeit von der Wahl der Druckfarbe verhindert die Deckschicht nicht nur ein Ablösen oder Beschädigen des Informationsträgers während der Nutzungszeit des Geschirrteils, sondern gewährleistet auch die geforderte Spülmaschinenbeständigkeit.

In einer Ausführungsform bedeckt die Deckschicht die der Oberfläche der Trägerschicht abgewandte Oberfläche des Informationsträgers und die Oberfläche der Trägerschicht vollständig. Auf diese Weise lässt sich ein Schutz des Informationsträgers und Trägerschicht vor Verunreinigungen und Beschädigungen erreichen.

Die Fläche der Deckschicht ist größer als die Fläche der Trägerschicht, sodass sich die Deckschicht über den gesamten Umfang der Trägerschicht hinweg über die Trägerschicht hinaus auf die Oberfläche des Geschirrteils erstreckt. Bei einer solchen Ausführungsform bewirkt die Deckschicht eine vollständige Kapselung des Informationsträgers.

Das Aufbringen der Deckschicht aus Druckfarbe umfasst in einer Ausführungsform der Erfindung ein Aufdrucken der Deckschicht und/oder ein Übertragen der Deckschicht in Form eines gedruckten Transferbilds.

Wird zum Aufbringen der Deckschicht aus Druckfarbe ein Übertragen der Deckschicht in Form eines gedruckten Transferbilds gewählt, so wird in einer Ausführungsform zunächst das gewünschte Dekor auf ein Trägerpapier aufgedruckt. Anschließend wird die fertig gedruckte Deckschicht nach Art eines Aufklebers oder Abziehbilds manuell auf das Geschirrteil und zumindest abschnittsweise über dem Informationsträger und der Trägerschicht appliziert. Abschließend wird das applizierte Transferbild durch Wärmezufuhr (Tempern) ausgehärtet.

In einer Ausführungsform der Erfindung ist das Transferbild mit einem organischen Farbsystem bedruckt.

Demgegenüber wird unter einem Aufdrucken der Deckschicht ein direktes Bedrucken auf den Informationsträger und/oder auf die Trägerschicht und/oder auf das Geschirrteil verstanden. Bei diesem Aufdrucken wird die Druckfarbe jeweils von einer Bedruckvorrichtung, insbesondere einer Druckmaschine, wie z.B. einer Siebdruckmaschine, auf die jeweilige Fläche des Geschirrteils, des Informationsträgers oder der Trägerschicht auf dem Geschirrteil ausgetragen.

Beim direkten Überdrucken des Informationsträgers und der Trägerschicht mit der Deckschicht aus Druckfarbe ergeben sich vielfältige Herausforderungen, die mit Hilfe der vorliegenden Erfindung lösbar sind.

Als problematisch erweist es sich, dass in allen Ausführungsformen der vorliegenden Erfindung mindestens zwei unterschiedliche Materialien, insbesondere aber drei unterschiedliche Materialien, nämlich ein Material des Informationsträgers, ein Material des Geschirrteils und ein Material der Trägerschicht zu überdrucken sind.

Zum anderen weist der Informationsträger in Ausführungsformen keine vollständig strukturlosen Oberflächen auf, sondern vielmehr gibt es zumindest einen Abschnitt des Informationsträgers, welcher gegenüber einer der Oberflächen des Informationsträgers vorspringt.

Insbesondere ist ein solcher vorspringender Abschnitt bei Ausführungsformen des Informationsträgers vorhanden, bei welchen die Antenne auf ein ebenes/ebenes Substrat aufgedruckt ist und ein integrierter Schaltkreis auf das Substrat aufgebracht ist, welcher die elektronische Schaltung umfasst. Dieser integrierte Schaltkreis springt dann als Abschnitt gegenüber der Oberfläche vor. Um einen ansprechenden ästhetischen Gesamteindruck zu erzeugen, deckt die Druckfarbe in einer Ausführungsform die durch das Verspringen eines Abschnitts gegenüber der ansonsten ebenen Oberfläche entstehenden Kanten ab.

In einer Ausführungsform der Erfindung bedeckt die Deckschicht die Oberfläche des Informationsträgers vollständig und die Druckfarbe der Deckschicht wird mit einer Dicke von mindestens 100 µm, vorzugsweise mit einer Dicke von mindestens 140 µm und besonders bevorzugt mit einer Dicke von mindestens 250 µm auf die Oberfläche des Informationsträgers aufgedruckt. Mit einer derartig dicken Deckschicht gelingt es, die Kanten gegenüber der Oberfläche der vorspringenden Abschnitte des Informationsträgers auszugleichen und die Beschichtung mit der Druckfarbe so aufzutragen, dass eine im Wesentlichen homogene und ebene Oberfläche der Deckschicht generiert wird.

Zu diesem Zweck muss in einer Ausführungsform die Viskosität der Druckfarbe so gewählt werden, dass sie zum Einen nach dem Aufdrucken ausreichend verläuft, um den geforderten Ausgleich der Kanten zu bewirken, zum Anderen muss die Viskosität aber so beschaffen sein, dass die Druckfarbe nicht von der bedruckten Fläche herunterläuft.

Um beide Bedingungen zu erfüllen, weist die Druckfarbe in einer Ausführungsform der Erfindung eine hohe Viskosität auf.

In einer weiteren Ausführungsform ist die Druckfarbe schnell trocknend. Dabei wird unter einer schnell trocknenden Druckfarbe im Sinne der vorliegenden Erfindung verstanden, dass die Farbe innerhalb von weniger als 30 Minuten, vorzugsweise innerhalb von weniger als 10 Minuten und besonders bevorzugt innerhalb von weniger als einer Minute bei Einstellen der entsprechenden Trocknungsparameter staubtrocken ist und die direkte Weiterverarbeitung, insbesondere eine Überdeckung mit einer weiteren Schicht aus Druckfarbe, erlaubt.

Die Deckschicht dient jedoch unabhängig von ihrer Herstellung nicht nur einer ästhetischen Oberdeckung des Informationsträgers, sondern bewirkt auch eine Kapselung des Informationsträgers und damit einem Schutz vor äußeren Einwirkungen, wie beispielsweise durch kaltes oder warmes Spülwasser oder mechanischen Druck, auf den Informationsträger. Die Überdeckung des Informationsträgers mit Druckfarbe schützt diesen aufgrund der isolierenden Eigenschaften der Druckfarbe auch vor thermischen Einflüssen.

In einer Ausführungsform der Erfindung erfolgt das Aufdrucken der Deckschicht in Siebdrucktechnik, wobei die Druckfarbe eine Siebdruckfarbe ist.

Es versteht sich, dass in einer alternativen Ausführungsform grundsätzlich das erfindungsgemäße Bedruckverfahren auch in Tampondrucktechnik mit einer Tampondruckfarbe ausgeführt werden könnte.

In einer Ausführungsform der Erfindung ist die Druckfarbe der Deckschicht eine organische Druckfarbe. Derartige organische Druckfarben erfordern nicht zwingenderweise eine Aushärtung durch Brennen der Farbe und können daher zur Beschichtung eingesetzt werden, auch wenn der Informationsträger, welcher temperaturempfindlich ist, bereits angebracht ist.

In einer Ausführungsform der Erfindung besteht eine solche organische Druckfarbe aus mindestens zwei Komponenten, wobei eine der Komponenten ein Härter ist. Bei derartigen Mehrkomponentendruckfarben lässt sich die Trocknungszeit einstellen und an die Bedruckung der hier in Rede stehenden Kombination aus Geschirrteil und Informationsträger anpassen.

In einer Ausführungsform der Erfindung ist die Druckfarbe der Deckschicht eine metallische Druckfarbe oder eine metallische Ersatzfarbe.

In einer Ausführungsform des erfindungsgemäßen Verfahrens wird die Druckfarbe der Deckschicht durch Einwirkung von UV-Strahlung auf das Geschirrteil mit dem Informationsträger und der Druckfarbe ausgehärtet. In einer weiteren Ausführungsform wird die Druckfarbe durch Erwärmen der Druckfarbe auf eine Temperatur von 70° Celsius oder weniger, vorzugsweise von 60° Celsius oder weniger und besonders bevorzugt von 50° C oder weniger ausgehärtet. Ein solches Aushärten ohne ein Brennen bei Temperaturen oberhalb von 70° C ermöglicht es, den Informationsträger wie beschrieben mit der der Deckschicht aus Druckfarbe zu versiegeln.

In einer Ausführungsform der Erfindung wird eine Mehrzahl von Deckschichten übereinander auf das Geschirrteil mit der Trägerschicht und dem Informationsträger aufgebracht. Dabei werden in einer Ausführungsform die einzelnen Deckschichten so ausgestaltet, dass ihre Flächen von dem Informationsträger aus betrachtet nach oben hin zunehmen. Auf diese Weise überdeckt jede folgende Deckschicht die darunterliegende Deckschicht vollständig und steht über den gesamten Umfang der darunterliegenden Deckschicht hin Weg über die darunterliegende Deckschicht hinaus über.

In einer Ausführungsform der Erfindung ist die Deckschicht zumindest abschnittsweise transparent, so dass die Deckschicht das Betrachten zumindest eines Abschnitts des Informationsträgers ermöglicht. Auf diese Weise kann der Informationsträger beispielsweise mit Hilfe einer Leuchtdiode eine Signalisierung von Information an einen Benutzer ermöglichen.

Grundsätzlich ist es für das erfindungsgemäße Verfahren zunächst unerheblich, an welcher Position auf dem Geschirrteil die Trägerschicht, der Informationsträger und die Deckschicht vorgesehen sind.

Unter einem Geschirrteil wird ein Gebrauchsgegenstand verstanden, welcher bei der Einnahme von Mahlzeiten verwendet wird, aber auch zur Verarbeitung und Aufbewahrung beispielsweise von Speisen, Chemikalien und Arzneimitteln. Insbesondere fallen gemäß der vorliegenden Erfindung Laborflaschen und -gläser, Laborgeschirr, Reagenzgläser, Flaschen zum Aufbewahren von Arzneimitteln und Chemikalien, Flacons, Teller, Schüsseln, Platten, Flaschenkühler sowie Trinkgefäße unter den Oberbegriff Geschirrteil.

Unter einem Trinkgefäß im Sinne der vorliegenden Erfindung wird ein Trinkgefäß unabhängig von der Wahl seines Materials verstanden. Bevorzugt ist jedoch ein Trinkgefäß aus Glas. Trinkgefäße im Sinne der vorliegenden Anmeldung umfassen Becher, Henkelartikel, wie Seidel, Tassen und Pitcher, Stilgefäße, aber auch Flaschen beziehungsweise Trinkflaschen.

Ein berührungslos auslesbarer elektronischer Informationsträger im Sinne der vorliegenden Erfindung umfasst in einer Ausführungsform ein Trägersubstrat, insbesondere ein Trägersubstrat aus Kunststoff. Zudem umfasst der Informationsträger in einer Ausführungsform eine elektronische Schaltung mit einem Sendeschaltkreis zum Abstrahlen eines Signals, einem Verarbeitungsschaltkreis und einem permanenten Speicher. Derartige elektronische Schaltungen sind aus dem Stand der Technik in mannigfaltiger Weise bekannt.

Dabei können einzelne Teile der elektronischen Schaltung in einem integrierten Schaltkreis, nämlich einem Chip, integriert sein. Ein Signal im Sinne der vorliegenden Erfindung kann ein elektrisches, ein magnetisches, ein elektromagnetisches oder ein optisches Signal sein. Bevorzugt sind jedoch Ausführungsformen, in denen das Signal auf ein magnetisches Feld oder ein elektromagnetisches Feld moduliert ist.

In einer Ausführungsform der Erfindung umfasst die elektronische Schaltung des Informationsträgers zusätzlich zu dem Schaltkreis auch einen Empfängerschaltkreis zum Empfangen eines Signals. Es versteht sich, dass auch dieser Empfängerschaltkreis dann mit dem Verarbeitungsschaltkreis verbunden ist.

In einer Ausführungsform der Erfindung sind der Sender- und/oder Empfängerschaltkreis analoge Schaltkreise. In einer weiteren Ausführungsform der Erfindung ist der Verarbeitungsschaltkreis ein digitaler Schaltkreis. Ein solcher digitaler Verarbeitungsschaltkreis ist in einer Ausführungsform ein Microcontroller.

In einer weiteren Ausführungsform weist die Schaltung zudem eine Antenne auf, welche mit dem Sender- und/oder Empfängerschaltkreis verbunden ist. Diese dient dazu, das Signal in Form eines magnetischen Feldes oder eines elektromagnetischen Feldes abzustrahlen oder zu empfangen.

In einer Ausführungsform der Erfindung ist die elektronische Schaltung ein RFID-Transponder. Eine Kopplung zwischen dem Lesegerät und einem solchen RFID-Transponder erfolgt in einer Ausführungsform der Erfindung entweder mit Hilfe eines magnetischen Wechselfeldes mit geringer Reichweite oder durch hochfrequente Radiowellen.

In einer Ausführungsform der Erfindung ist der RFID-Transponder ein Transponder nach dem NFC-Standard. Derartige Transponder lassen sich mit herkömmlichen mobilen Endgeräten, zum Beispiel einem Smartphone oder einem Tablet, auslesen und sind preiswert verfügbar.

In einer Ausführungsform der Erfindung wird der Informationsträger mit Hilfe eines Applikators auf die Trägerschicht aufgebracht und in die Trägerschicht eingedrückt, wobei der Applikator und das Geschirrteil relativ gegeneinander bewegbar sind, wobei der Applikator eine Kamera zur Erfassung einer Position der Trägerschicht auf dem Geschirrteil aufweist, wobei eine Positionierung des Applikators mit dem Informationsträger relativ zu dem Geschirrteil anhand eines von der Kamera erzeugten Bildes des Geschirrteils mit der Trägerschicht erfolgt. Auf diese Weise kann der Informationsträger automatisiert auf der Trägerschicht appliziert werden.

In einer Ausführungsform des erfindungsgemäßen Verfahrens wird der Informationsträger mit Hilfe eines Applikators auf die Trägerschicht aufgebracht und in die Trägerschicht eingedrückt wird, wobei der Applikator und das Geschirrteil relativ gegeneinander bewegbar sind und wobei der Applikator eine berührungslose Lese- und/oder Schreibeinrichtung zum Auslesen und/oder Beschreiben des Informationsträgers aufweist. Auf diese Weise ist es möglich, noch während dem Aufbringen des Informationsträgers auf das Geschirrteil zum Einen den angebrachten Informationsträger auf Funktionstüchtigkeit zu überprüfen, zum Anderen aber die eindeutige Identifikation des Geschirrteils, die von dem Informationsträger bereitgestellt wird, in einer Datenbank abzulegen.

Eine geeingete Bedruckvorrichtung zum Bedrucken eines Geschirrteils umfasst mit einen Halter für das Geschirrteil, einen ersten Druckkopf zum Aufdrucken einer Schicht auf das Geschirrteil und einen Applikator, der derart angeordnet und ausgestaltet ist, dass mit dem Applikator ein berührungslos auslesbarer Informationsträger auf eine Trägerschicht auf dem Geschirrteil aufbringbar ist, wobei der Applikator und der Halter für das Geschirrteil derart relativ gegeneinander bewegbar sind, dass mit dem Applikator der Informationsträger in die Trägerschicht auf dem Geschirrteil eindrückbar ist.

Beispielsweise hat der Applikator die Form eines Stempels, wobei die Stempelfläche derart ausgestaltet ist, dass der Informationsträger an der Stempelfläche lösbar gehaltert ist, beispielsweise durch eine Vakuumeinrichtung.

Mit einer derart ausgestalteten Bedruckvorrichtung lässt sich zumindest die Trägerschicht oder die Deckschicht auf das Geschirrteil aufdrucken und der Informationsträger auf die Trägerschicht aufbringen und in diese eindrücken.

Beispielsweise ist der erste Druckkopf derart ausgestaltet und angeordnet, dass mit dem ersten Druckkopf die Trägerschicht mit einem plastisch verformbaren Material auf den Geschirrträger aufdruckbar ist. Auf diese Weise lässt sich mit der Bedruckvorrichtung die Trägerschicht auf das Geschirrteil aufbringen bevor der Informationsträger appliziert wird.

In einer Variante weist die Bedruckvorrichtung einen zweiten Druckkopf auf, wobei der zweite Druckkopf der derart ausgestaltet und angeordnet ist, dass mit dem zweiten Druckkopf die Deckschicht aus Druckfarbe auf die Trägerschicht und den Informationsträger aufdruckbar ist.

In einer weiteren variante umfasst die Bedruckvorrichtung eine Kamera zum Erfassen eines Bildes des Geschirrteils und eine Steuerung, wobei die Steuerung derart wirksam mit der Kamera verbunden ist, dass die Steuerung in einem Betrieb der Bedruckvorrichtung Bilddaten von der Kamera erhält, wobei die Steuerung derart wirksam mit einer Antriebseinheit für eine Relativbewegung zwischen dem Applikator und dem Geschirrteil verbunden ist, dass die Antriebseinheit in dem Betrieb der Bedruckvorrichtung ein Steuersignal von der Steuerung erhält, wobei die Steuerung derart eingerichtet ist, dass die Steuerung in dem Betrieb der Vorrichtung aus den Bilddaten eine Position auf der Trägerschicht zum Aufbringen des Informationsträgers auf die Trägerschicht berechnet und Steuersignale erzeugt und an die Antriebseinheit überträgt, so dass der Informationsträger an der berechneten Position aufgebracht wird.

Zumindest eine der oben genannten Aufgaben wird auch gelöst durch eine Vorrichtung mit einem Geschirrteil, das aus einem Material besteht, das ausgewählt ist aus einer Gruppe bestehend aus Glas, Keramik und Kunststoff oder einer Kombination davon, einer auf eine Oberfläche des Geschirrteils aufgebrachten Trägerschicht, einem auf eine der Oberfläche des Geschirrteils abgewandten Oberfläche der Trägerschicht aufgebrachten, berührungslos auslesbaren elektronischen Informationsträger und einer Deckschicht aus Druckfarbe, wobei eine Grundfläche des Informationsträgers kleiner ist als eine Fläche der Trägerschicht, wobei die Deckschicht eine der Trägerschicht abgewandte Oberfläche des Informationsträgers und die Oberfläche der Trägerschicht zumindest abschnittsweise bedeckt, wobei die Trägerschicht ein plastisch verformbares Material umfasst und wobei der Informationsträger in die Trägerschicht eingedrückt ist und wobei eine Fläche der Deckschicht größer ist als die Fläche der Trägerschicht, sodass sich die Deckschicht über den gesamten Umfang der Trägerschicht hinweg über die Trägerschicht hinaus auf die Oberfläche des Geschirrteils erstreckt.

Sämtliche Merkmale, wie sie durch das zuvor beschriebene Verfahren auf dem Geschirrteil erzeugt werden, können in einer Ausführungsform als entsprechendes Elemente an beziehungsweise auf dem Geschirrteil der beanspruchten Vorrichtung vorgesehen sein.

Weitere Vorteile, Merkmale oder Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine schematische Querschnittsansicht eines Trinkglases mit einem damit verbundenen Informationsträger gemäß einer Ausführungsform der vorliegenden Erfindung.
- Figur 2: ist eine schematische Querschnittsansicht eines Informationsträgers gemäß einer Ausführungsform der vorliegenden Erfindung.
- Figur 3: ist eine weggebrochene schematische Querschnittsansicht der Oberfläche eines Trinkglases mit einer Trägerschicht gemäß einer Ausführungsform der vorliegenden Erfindung.
- Figur 4: ist eine weggebrochene schematische Querschnittsansicht der Oberfläche des Trinkglases mit der Trägerschicht aus Figur 3 mit einem Informationsträger und einem Applikator vor dem Aufbringen des Informationsträgers auf die Trägerschicht.
- Figur 5: ist eine weggebrochene schematische Querschnittsansicht der Oberfläche des Trinkglases mit der Trägerschicht aus Figur 4 mit dem aufgebrachten und in die Oberfläche der Trägerschicht eingedrückten Informationsträger.
- Figur 6: ist eine schematische Draufsicht auf die Anordnung aus Figur 5.
- Figur 7: ist eine weggebrochene schematische Querschnittsansicht der Oberfläche des Trinkglases mit der Anordnung aus Figur 5 mit einer aufgedruckten Deckschicht.
- Figur 8: ist eine weggebrochene schematische Querschnittsansicht einer alternativen Ausführungsform mit einer Mehrzahl von Deckschichten.

Für die nachfolgend beschriebenen Ausführungsformen der vorliegenden Erfindung wird davon ausgegangen, dass ein Informationsträger 2 mit einem Trinkglas 1 verbunden ist. Die Kombination aus Trinkglas 1 und Informationsträger 2 bildet die erfindungsgemäße Vorrichtung. Ein Trinkglas, nachfolgend kurz auch als Glas bezeichnet, ist ein Beispiel für ein Geschirrteil im Sinne der vorliegenden Anmeldung.

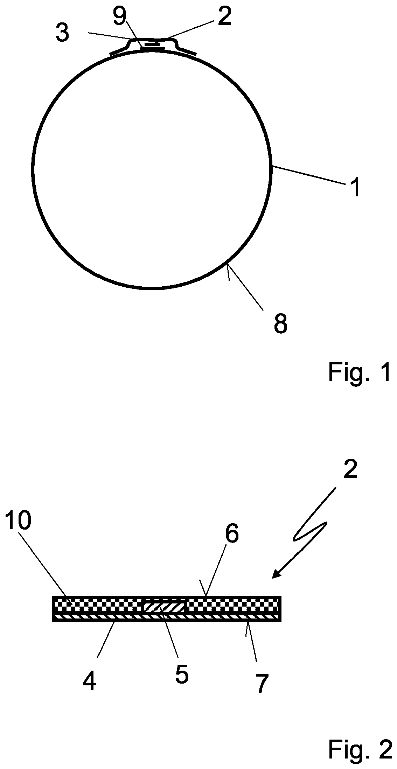

Figur 1 ist eine schematische Querschnittsansicht durch ein solches Trinkglas 1 mit einem darauf angebrachten Informationsträger 2. Der Informationsträger 2 ist auf bzw. in einer Trägerschicht 9 auf dem Trinkglas 1 aufgebracht. Eine Deckschicht 3 aus Druckfarbe deckt die Trägerschicht 8 und den Informationsträger 2 ab, so dass der Informationsträger 2 von der Deckschicht geschützt und durch diese mit dem Trinkglas 1 verbunden ist. Die schematische Querschnittsansicht aus Figur 1 verdeutlicht unabhängig von der konkreten Ausgestaltung der Kapselung des Informationsträgers die Positionierung des Informationsträgers 2 an dem Trinkglas 1. Die Positionierung ist für alle hier diskutierten Ausführungsformen die gleiche.

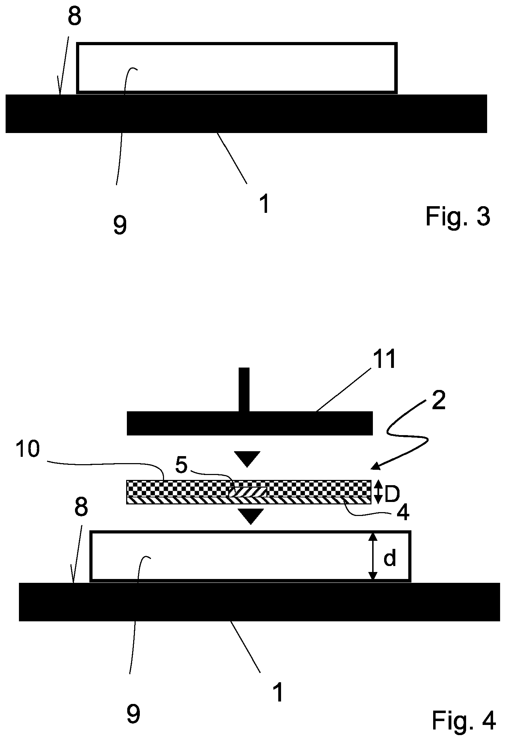

Die nachfolgend diskutierten Figuren 3 bis 7 zeigen vergrößerte Ausschnitte aus der schematischen Darstellung der Figur 1 im Bereich des Informationsträgers 2. In den Querschnittsansichten der Figuren 3 bis 5 sowie 7 und 8 ist das Glas 1 beziehungsweise seine Oberfläche als ebene Form dargestellt. Dies erscheint auf der aufgrund der starken Vergrößerung des Ausschnitts gerechtfertigt. Tatsächlich ist aber die Glasoberfläche 8 aller Ausführungsformen wie in Figur 1 gezeigt gekrümmt.

Bei dem hier betrachteten Informationsträger handelt es sich um einen RFID-Transponder, so wie er schematisch in der Querschnittsansicht aus Figur 2 gezeigt ist. Der Transponder 2 umfasst eine planare, auf ein ebenes Substrat 10 aufgedruckte Antennenstruktur 4 und einen in einem Chip 5 integrierten Verarbeitungsschaltkreis. Das Substrat 10 oder Chip-Label gleich auch die Höhenunterschiede zwischen Antenne 4 und Chip 5 aus. Auf diese Weise ist die der Trägerschicht 9 abgewandte Oberfläche 6 des Transponders 2 im Wesentlichen glatt, d.h. sie weist keine Strukturtiefen auf, welche einer Bedruckung entgegenstehen würden.

Die zweite Oberfläche 7 des Transponders 2 weist durch die Antennenstruktur eine gewisse Unebenheit bzw. Rauheit auf. Da diese Oberfläche 7 bei dem Aufbringen des Transponders 2 auf das Trinkgefäß 1 mit der der Glasfläche 8 abgewandten Oberfläche 12 des Trägerschicht 9 in Eingriff kommt, spielt diese Rauheit der Oberfläche 7 für die Bedruckbarkeit der Anordnung aber keine Rolle.

Die Figuren 3 bis 5 sowie 7 und 8 zeigen weggebrochene schematische Querschnittsansichten des Trinkglases 1 aus Figur 1 an derjenigen Position, an welcher der RFID-Transponder 2 auf das Trinkglas 1 aufgebracht ist. Die Figuren 3 bis 7 beschreiben zusammen das schrittweise Aufbringen der einzelnen Schichten auf die Oberfläche 8 des Trinkglases 1.

Figur 3 zeigt das Trinkglas 1 mit der auf seine Oberfläche 8 aufgebrachten Trägerschicht 9. Die Trägerschicht 9 besteht dabei aus einem Thermoplast, in dem gezeigten Beispiel aus Polypropylen. Thermoplaste weisen für das erfindungsgemäße Konzept den Vorteil auf, dass sie zum einen mithilfe von Siebdrucktechnik auf die Glasoberfläche 8 auf druckbar sind. D.h. die Trägerschicht 9 kann mit den bekannten Verfahren zum Bedrucken der Oberfläche 8 eines Trinkglases 1 beschichtet werden. Darüber hinaus ist der Thermoplast unter Druck und gegebenenfalls erhöhter Temperatur plastisch verformbar.

In Figur 4 steht das Aufbringen des Transponders 2 auf die der Glasoberfläche 8 abgewandte Oberfläche 12 der Trägerschicht 9 mit Hilfe eines Applikators 11 unmittelbar bevor. Der Applikator 11 umfasst einen Stempel mit einer Fläche, die (anders als in Figur 4 dargestellt) im Wesentlichen gleich der Grundfläche des Transponders 2 ist. Beim Applizieren des Transponders 2 auf die Oberfläche 12 der Trägerschicht 9 wird der Transponder 2 von einer Ansaugvorrichtung in der Stempelfläche des Applikators 11 gehalten, sodass der Transponder 2 mit dem Applikator relativ zu der Trägerschicht 9 bewegt werden kann. Hat dabei der Applikator die für den Transponder 2 vorgesehene Position über der Oberfläche 12 der Trägerschicht 9 erreicht, so setzt der Applikator den Transponder 2 ab, sodass die Oberfläche 7 des Transponders 2 mit der Oberfläche 12 der Trägerschicht 9 in Eingriff kommt.

Sobald der Transponder 2 mit der Oberfläche 12 der Trägerschicht 9 in Eingriff ist, drückt der Applikator 11 den Transponder 2 so in die Oberfläche 12, dass sich die Trägerschicht 9 plastisch verformt und der Transponder 2 in die Oberfläche 12 der Trägerschicht 9 einsinkt. Aufgrund der plastischen Verformbarkeit der Trägerschicht 9 verbleibt auch nach dem Abheben des Applikators 11 der Transponder 2 in seiner eingesunkenen Position. Um ein solches Einsinken des Transponders 2 zu ermöglichen ist in der dargestellten Ausführungsform die Dicke d der Trägerschicht 9 vor dem Eindrücken des Transponders 2 in die Oberfläche 12 größer als die maximale Dicke D des Transponders 2. Die der Trägerschicht 9 abgewandte Oberfläche 6 des Transponders 2 bildet nun zusammen mit der der Glasoberfläche 8 abgewandten Oberfläche 12 der Trägerschicht 9 eine im wesentlichen glatte Oberfläche ohne nennenswerte Höhenunterschiede bzw. Versetzungen. Mit anderen Worten ausgedrückt hat die Gesamtoberfläche aus der Oberfläche 6 des Transponders 2 und der Oberfläche 12 der Trägerschicht 9 eine Rauheit, die ausreichend klein ist, um ein Bedrucken zu ermöglichen.

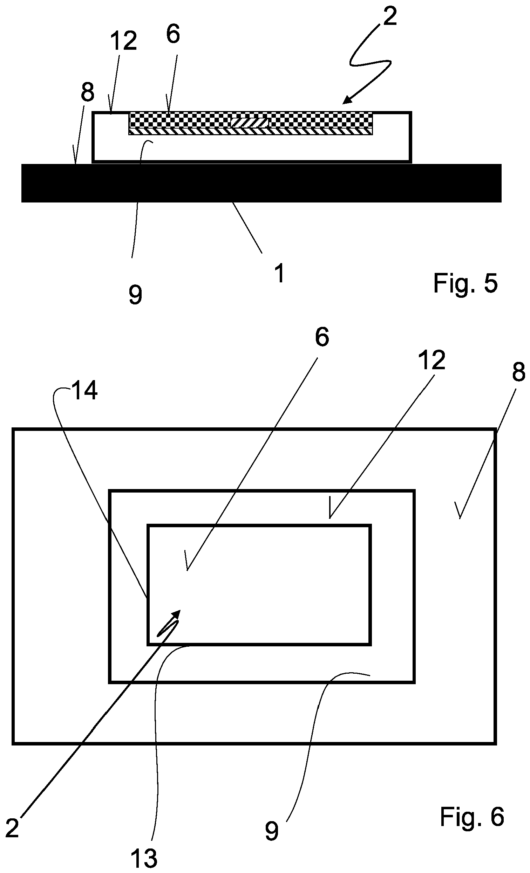

Wie in Figur 6 gezeigt ist nach dem Eindrücken des Transponders 2 in die Oberfläche 12 der Trägerschicht 9 der Transponder 2 vollständig, d. h. über seinen vollständigen Umfang hinweg, nach Art eines Rahmens mit dem Material der Trägerschicht 9 umgeben. D.h. das Material der Trägerschicht 9 ist entlang der Längsseiten 13 und der Querseiten 14 von dem Material der Trägerschicht 9 umgeben.

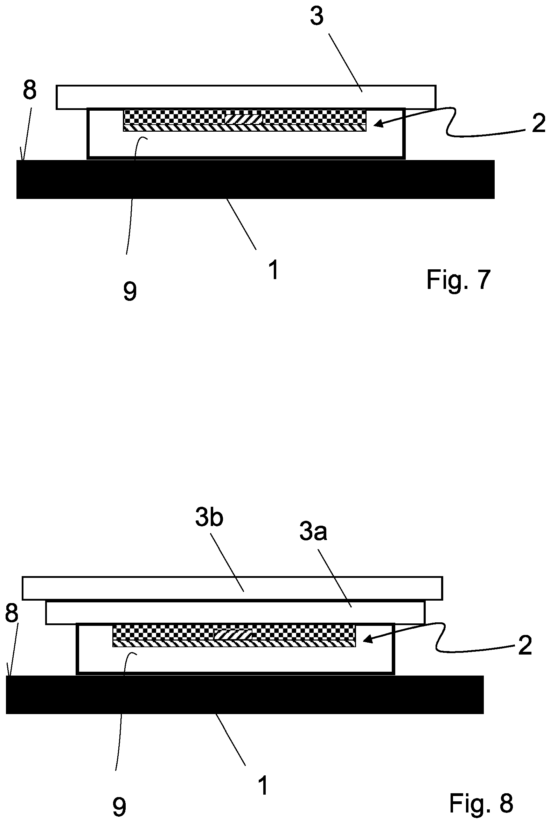

Abschließend wird wie in Figur schematisch gezeigt, die Anordnung aus dem Trinkglas 1, der Trägerschicht 9 und dem Transponder 2 mit einer Deckschicht 3 aus Druckfarbe überdruckt. Dabei ist die Fläche der Druckfarbe größer als die Fläche der Trägerschicht 9, sodass die Deckschicht 3 die Trägerschicht 9 vollständig überdeckt und sich entlang des Umfangs der Trägerschicht 9 an allen Stellen bis auf die Oberfläche 8 des Trinkglases 1 erstreckt. Auf diese Weise kapselt die Deckschicht 3 die Anordnung aus der Trägerschicht 9 und dem Transponder 2 vollständig. Anders als in den schematischen Darstellungen der Figuren 7 und 8 gezeigt ist dabei jede der Deckschichten 3, 3a, 3b auch mit der Oberfläche 8 des Trinkglases 1 in unmittelbarem Eingriff.

Nach dem Aufkleben des Transponders 2 wird das Glas 1 im Bereich des Transponders 2 mit einer Deckschicht 3 aus einer Glasfarbe bedruckt. Dies gestaltet sich aus mehreren Gründen als schwierig. Zum einen müssen zwei unterschiedliche Materialien mit der gleichen Glasfarbe der Deckschicht 3 bedruckt werden, nämlich zum einen das Glasmaterial des Trinkglases 1, zum anderen das Kunststoffmaterial des Transponders 2. Zudem kann die Glasfarbe 3 nicht in einem nachfolgenden Arbeitsschritt gebrannt werden, da ansonsten der Transponder 2 beschädigt würde. Daher wurde die Glasfarbe für die Deckschicht 3 der Ausführungsform aus Figur 3, aber auch für die Deckschichten 3 aller weiteren Ausführungsformen gemäß den anderen Figuren sorgsam ausgewählt.

Als Deckschicht 3 wurde eine organische Zweikomponentenglasfarbe mit einer Farbkomponente und einem Härter gewählt. Diese weist den Vorteil auf, dass sie vergleichsweise schnell durch Erwärmen der Struktur aus Glas 1, Trägerschicht 9, Transponder 2 und Deckschicht 3 ausgehärtet wird, aber ohne ein Brennen auskommt. In der dargestellten Ausführungsform ist die Glasfarbe der Deckschicht 3 so gewählt, dass sie bei entsprechender Erwärmung auf eine Temperatur von 65° C innerhalb von 30 Sekunden staubtrocken härtet.

Dies stellt sich insbesondere deshalb als Herausforderung heraus, da die Deckschicht 3 den gesamten Transponder mit einer Dicke von 200 µm überdeckt.

Darüber hinaus gilt es, die Druckfarbe so zu wählen, dass die Farbe eine hohe Viskosität aufweist, um ein Herunterlaufen der Farbe nach dem Aufdrucken und vor dem Trocknen von der Struktur des Transponders 2 zu verhindern.

In einer alternativen Ausführungsform, so wie sie schematisch in Figur 8 gezeigt ist, werden mehrere, in dem Beispiel aus Figur 8 zwei, Deckschichten 3a, 3b übereinander aufgedruckt. Dabei werden die Flächen der Deckschichten 3a, 3b nach oben hin immer größer, sodass jede Deckschicht alle darunterliegenden Schichten der Anordnung vollständig überdeckt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Merkmalen beansprucht sind, schließt ihre Kombination nicht aus. Bezugszeichen in den Ansprüchen sind nicht als Beschränkung des Schutzbereichs gedacht.

### Bezugszeichenliste

- 1: Trinkglas
- 2: RFID-Transponder
- 3: Deckschicht
- 4: Substrat
- 5: Chip
- 6: der Oberfläche 12 der Trägerschicht 9 abgewandte Oberfläche des RFID-Transponders 2
- 7: der Oberfläche 12 der Trägerschicht 9 zugewandte Oberfläche des RFID-Transponders 2
- 8: Glasoberfläche
- 9: Trägerschicht
- 10: Chip-Label
- 11: Applikator
- 12: der Glasoberfläche 8 abgewandte Oberfläche der Trägerschicht 9
- 13: Längsseite
- 14: Querseite

- D: maximale Dicke des Informationsträgers
- d: Dicke der Trägerschicht 9 vor dem Aufbringen des RFID-Transponders 2

## Patentansprüche

1. Verfahren zum Verbinden eines Geschirrteils (1) mit einem berührungslos auslesbaren elektronischen Informationsträger (2) mit den Schritten
Bereitstellen des Geschirrteils (1), wobei das Geschirrteil (1) aus einem Material besteht, dass ausgewählt wird aus einer Gruppe bestehend aus Glas, Keramik und Kunststoff oder einer Kombination davon,
Aufbringen einer Trägerschicht (9) auf eine Oberfläche (8) des Geschirrteils (1), Aufbringen des Informationsträgers (2) auf eine der Oberfläche (8) des Geschirrteils (1) abgewandte Oberfläche (12) der Trägerschicht (9),
wobei eine Grundfläche des Informationsträgers (2) kleiner ist als eine Fläche der Trägerschicht (9), und
Aufbringen einer Deckschicht (3) aus Druckfarbe derart, dass die Deckschicht (3) eine der Trägerschicht (9) abgewandte Oberfläche (6) des Informationsträgers (2) und die Oberfläche (12) der Trägerschicht (9) zumindest abschnittsweise bedeckt,
**dadurch gekennzeichnet, dass**
die Trägerschicht (9) ein plastisch verformbares Material umfasst, wobei das Aufbringen des Informationsträgers (2) auf die Trägerschicht (9) ein Eindrücken des Informationsträgers (2) in die Trägerschicht (9) umfasst und
wobei eine Fläche der Deckschicht (3) größer ist als die Fläche der Trägerschicht (9), sodass sich die Deckschicht (3) über den gesamten Umfang der Trägerschicht (9) hinweg über die Trägerschicht (9) hinaus auf die Oberfläche (8) des Geschirrteils (1) erstreckt.

2. Verfahren nach dem vorhergehenden Anspruch, wobei das plastisch verformbare Material der Trägerschicht (9) ein plastisch verformbarer Kunststoff, insbesondere ein Thermoplast, ist.

3. Verfahren nach einem der vorhergehenden Ansprüche, **dadurch gekennzeichnet, dass** eine Dicke (d) der Trägerschicht (9) vor dem Aufbringen des Informationsträgers (2) mindestens so groß, vorzugsweise größer als eine maximale Dicke (D) des Informationsträgers (2) ist.

4. Verfahren nach einem der vorhergehenden Ansprüche, **dadurch gekennzeichnet, dass** der Informationsträger (2) zwei Längsseiten (13) und zwei Querseiten (14) aufweist, wobei der Informationsträger (2) nach dem Eindrücken des Informationsträgers (2) in die Trägerschicht entlang der Längsseiten (13) und der Querseiten (14) von dem Material der Trägerschicht (9) umgeben ist.

5. Verfahren nach einem der vorhergehenden Ansprüche, **dadurch gekennzeichnet, dass** nach dem Eindrücken des Informationsträgers (2) in die Trägerschicht (9) die der Oberfläche (12) der Trägerschicht (9) abgewandte Oberfläche (6) des Informationsträgers (2) und die Oberfläche (12) der Trägerschicht (9) zusammen eine geschlossene Oberfläche mit einer Rauheit bilden, wobei die Rauheit das Aufbringen der Deckschicht (3) ermöglicht.

6. Verfahren nach einem der vorhergehenden Ansprüche, **dadurch gekennzeichnet, dass** die Trägerschicht (9) ein klebendes Material, vorzugsweise ein selbstklebendes Material, umfasst.

7. Verfahren nach einem der vorhergehenden Ansprüche, **dadurch gekennzeichnet, dass** das Aufbringen der Trägerschicht (9) durch Aufdrucken, vorzugsweise durch Aufdrucken in Siebdrucktechnik, erfolgt.

8. Verfahren nach einem der vorhergehenden Ansprüche, **dadurch gekennzeichnet, dass** die Deckschicht (3) die der Oberfläche (12) der Trägerschicht (8) abgewandte Oberfläche (6) des Informationsträgers (2) und die Oberfläche (12) der Trägerschicht (9) vollständig bedeckt.

9. Verfahren nach einem der vorhergehenden Ansprüche, **dadurch gekennzeichnet, dass** eine Fläche der Deckschicht (3) größer ist als die Fläche der Trägerschicht (9), so dass sich die Deckschicht (3) über den gesamten Umfang der Trägerschicht (9) hinweg über die Trägerschicht (9) hinaus auf die Oberfläche des Geschirrteils (1) erstreckt

10. Verfahren nach einem der vorhergehenden Ansprüche, **dadurch gekennzeichnet, dass** das Aufbringen der Deckschicht (3) ein Aufdrucken der Deckschicht (3) oder ein Übertragen der Deckschicht (3) in Form eines gedruckten Transferbilds umfasst.

11. Verfahren nach einem der vorhergehenden Ansprüche, **dadurch gekennzeichnet, dass** eine Mehrzahl von Deckschichten (3) übereinander aufgebracht werden.

12. Verfahren nach einem der vorhergehenden Ansprüche, **dadurch gekennzeichnet, dass** der Informationsträger (2) mit Hilfe eines Applikators (11) auf die Trägerschicht (9) aufgebracht und in die Trägerschicht (9) eingedrückt wird, wobei der Applikator (11) und das Geschirrteil (1) relativ gegeneinander bewegbar sind, wobei der Applikator eine Kamera zur Erfassung einer Position der Trägerschicht (9) auf dem Geschirrteil (1) aufweist, wobei eine Positionierung des Applikators (11) mit dem Informationsträger (2) relativ zu dem Geschirrteil (1) anhand eines von der Kamera erzeugten Bildes des Geschirrteils (1) mit der Trägerschicht (9) erfolgt.

13. Verfahren nach einem der vorhergehenden Ansprüche, **dadurch gekennzeichnet, dass** der Informationsträger (2) mit Hilfe eines Applikators (11) auf die Trägerschicht (9) aufgebracht und in die Trägerschicht (9) eingedrückt wird, wobei der Applikator (11) eine berührungslose Lese- und/oder Schreibeinrichtung zum Auslesen und/oder Beschreiben des Informationsträgers aufweist.

14. Vorrichtung mit
einem Geschirrteil (1), das aus einem Material besteht, das ausgewählt ist aus einer Gruppe bestehend aus Glas, Keramik und Kunststoff oder einer Kombination davon,
einer auf eine Oberfläche (8) des Geschirrteils (1) aufgebrachten Trägerschicht (9), einem auf eine der Oberfläche (8) des Geschirrteils (1) abgewandten Oberfläche (12) der Trägerschicht (9) aufgebrachten, berührungslos auslesbaren elektronischen Informationsträger (2) und
einer Deckschicht (3) aus Druckfarbe,
wobei eine Grundfläche des Informationsträgers (2) kleiner ist als eine Fläche der Trägerschicht (9), und
wobei die Deckschicht (3) eine der Trägerschicht (9) abgewandte Oberfläche (6) des Informationsträgers (2) und die Oberfläche (12) der Trägerschicht (9) zumindest abschnittsweise bedeckt,
**dadurch gekennzeichnet, dass**
die Trägerschicht (9) ein plastisch verformbares Material umfasst,
der Informationsträger (2) in die Trägerschicht (9) eingedrückt ist und
eine Fläche der Deckschicht (3) größer ist als die Fläche der Trägerschicht (9), sodass sich die Deckschicht (3) über den gesamten Umfang der Trägerschicht (9) hinweg über die Trägerschicht (9) hinaus auf die Oberfläche (8) des Geschirrteils (1) erstreckt.

## Claims

1. A method of connecting a crockery item (1) to a contactlessly readable electronic information carrier (2) comprising the steps
providing the crockery item (1), the crockery item (1) comprising a material selected from a group consisting of glass, ceramic and plastic or a combination thereof,
applying a carrier layer (9) to a surface (8) of the crockery item (1),
applying the information carrier (2) to a surface (12) of the carrier layer (9), that is remote from the surface (8) of the crockery item (1),
wherein a base surface of the information carrier (2) is smaller than a surface of the carrier layer (9), and
applying a cover layer (3) of printing ink in such a way that the cover layer (3) at least portion-wise covers a surface (6) of the information carrier (2), that is remote from the carrier layer (9) and the surface (12) of the carrier layer (9)
**characterised in that**
the carrier layer (9) includes a plastically deformable material, wherein
applying of the information carrier (2) to the carrier layer (9) includes impressing the information carrier (2) into the carrier layer (9), and
wherein a surface of the cover layer (3) is larger than the surface of the carrier layer (9) so that the cover layer (3) over the entire periphery of the carrier layer (9) extends beyond the carrier layer (9) onto the surface of the crockery item (1).

2. The method according to the preceding claim, wherein the plastically deformable material of the carrier layer (9) is a plastically deformable plastic, in particular a thermoplastic.

3. The method according to any one of the preceding claims, **characterised in that** a thickness (d) of the carrier layer (9) prior to applying the information carrier (2) is at least as large, preferably larger than a maximum thickness (D) of the information carrier (2).

4. The method according to any one of the preceding claims, **characterised in that** the information carrier (2) has two longitudinal sides (13) and two transverse sides (14), wherein the information carrier (2) is surrounded by the material of the carrier layer (9) along the longitudinal sides (13) and the transverse sides (14) after impressing the information carrier (2) into the carrier layer.

5. The method according to any one of the preceding claims, **characterised in that** after impressing the information carrier (2) into the carrier layer (9) the surface (6) of the information carrier (2), that is remote from the surface (12) of the carrier layer (9), and the surface (12) of the carrier layer (9) together form a closed surface with a roughness, the roughness permitting application of the carrier layer (3).

6. The method according to any one of the preceding claims, **characterised in that** the carrier layer (9) includes an adhesive material, preferably a self-adhesive material.

7. The method according to any one of the preceding claims, **characterised in that** applying the carrier layer (9) is effected by printing it, preferably by printing using a screen printing method.

8. The method according to any one of the preceding claims, **characterised in that** the cover layer (3) completely covers the surface (6) of the information carrier (2), that is remote from the surface (12) of the carrier layer (9), and the surface (12) of the carrier layer (9).

9. The method according to any one of the preceding claims, **characterised in that** a surface of the cover layer (3) is larger than the surface of the carrier layer (9) so that the cover layer (3) over the entire periphery of the carrier layer (9) extends beyond the carrier layer (9) onto the surface of the crockery item (1).

10. The method according to any one of the preceding claims, **characterised in that** applying of the cover layer (3) includes printing the cover layer (3) or transferring the cover layer (3) in the form of a printed transfer image.

11. The method according to any one of the preceding claims, **characterised in that** a plurality of cover layers (3) are applied one over the other.

12. The method according to any one of the preceding claims, **characterised in that** the information carrier (2) is applied to the carrier layer (9) by means of an applicator (11) and is impressed into the carrier layer (9), wherein the applicator (11) and the crockery item (1) are moveable relative to each other, wherein the applicator has a camera for detecting a position of the carrier layer (9) on the crockery item (1), and wherein positioning of the applicator (11) with the information carrier (2) relative to the crockery item (1) is effected by means of an image, created by the camera, of the crockery item (1) with the carrier layer (9).

13. The method according to any one of the preceding claims, **characterised in that** the information carrier (2) is applied to the carrier layer (9) by means of an applicator (11) and thereby impressed into the carrier layer (9), wherein the applicator (11) has a contactless reading and/or writing device for reading and/or writing the information carrier.

14. An apparatus comprising
a crockery item (1) comprising a material selected from a group consisting of glass, ceramic and plastic or a combination thereof,
a carrier layer (9) applied to a surface (8) of the crockery item (1),
a contactlessly readable electronic information carrier (2) applied to a surface (12) of the carrier layer (9), that is remote from the surface (8) of the crockery item (1), and
a cover layer (3) of printing ink,
wherein a base surface of the information carrier (2) is smaller than a surface of the carrier layer (9), and
wherein the cover layer (3) at least portion-wise covers a surface (6) of the information carrier (2), that is remote from the carrier layer (9), and the surface (12) of the carrier layer (9),
**characterised in that**
the carrier layer (9) includes a plastically deformable material, and
the information carrier (2) is impressed into the carrier layer (9), and
a surface of the cover layer (3) is larger than the surface of the carrier layer (9) so that the cover layer (3) over the entire periphery of the carrier layer (9) extends beyond the carrier layer (9) onto the surface of the crockery item (1).

## Revendications

1. Procédé de liaison d'une pièce de vaisselle (1) à un support d'informations électronique (2) pouvant être lu sans contact, comprenant les étapes consistant à
fournir la pièce de vaisselle (1), la pièce de vaisselle (1) étant constituée d'un matériau choisi dans un groupe constitué par le verre, la céramique et le plastique ou une combinaison de ceux-ci,
appliquer une couche de support (9) sur une surface (8) de la pièce de vaisselle (1),
appliquer le support d'informations (2) sur une surface (12) de la couche de support (9) opposée à la surface (8) de la pièce de vaisselle (1),
une surface de base du support d'informations (2) étant plus petite qu'une surface de la couche de support (9), et
appliquer une couche de recouvrement (3) en encre d'imprimerie de telle sorte que la couche de recouvrement (3) recouvre au moins par sections une surface (6) du support d'informations (2) opposée à la couche de support (9) et la surface (12) de la couche de support (9),
**caractérisé en ce que**
la couche de support (9) comprend un matériau déformable plastiquement,
l'application du support d'informations (2) sur la couche de support (9) comprenant un enfoncement du support d'informations (2) dans la couche de support (9), et
une surface de la couche de recouvrement (3) étant plus grande que la surface de la couche de support (9), de sorte que la couche de recouvrement (3) s'étend sur toute la circonférence de la couche de support (9) au-delà de la couche de support (9) sur la surface (8) de la pièce de vaisselle (1).

2. Procédé selon la revendication précédente, le matériau déformable plastiquement de la couche de support (9) étant un plastique déformable plastiquement, en particulier un thermoplastique.

3. Procédé selon l'une quelconque des revendications précédentes, **caractérisé en ce qu'**une épaisseur (d) de la couche de support (9) avant l'application du support d'informations (2) est au moins aussi grande, de préférence plus grande, qu'une épaisseur maximale (D) du support d'informations (2).

4. Procédé selon l'une quelconque des revendications précédentes, **caractérisé en ce que** le support d'informations (2) comprend deux côtés longitudinaux (13) et deux côtés transversaux (14), le support d'informations (2) étant entouré par le matériau de la couche de support (9) après l'enfoncement du support d'informations (2) dans la couche de support le long des côtés longitudinaux (13) et des côtés transversaux (14).

5. Procédé selon l'une quelconque des revendications précédentes, **caractérisé en ce qu'**après l'enfoncement du support d'informations (2) dans la couche de support (9), la surface (6) du support d'informations (2) opposée à la surface (12) de la couche de support (9) et la surface (12) de la couche de support (9) forment ensemble une surface fermée avec une rugosité, la rugosité permettant l'application de la couche de recouvrement (3).

6. Procédé selon l'une quelconque des revendications précédentes, **caractérisé en ce que** la couche de support (9) comprend un matériau adhésif, de préférence un matériau auto-adhésif

7. Procédé selon l'une quelconque des revendications précédentes, **caractérisé en ce que** l'application de la couche de support (9) est réalisée par impression, de préférence par impression selon une technique de sérigraphie.

8. Procédé selon l'une quelconque des revendications précédentes, **caractérisé en ce que** la couche de recouvrement (3) recouvre complètement la surface (6) du support d'informations (2) opposée à la surface (12) de la couche de support (8) et la surface (12) de la couche de support (9).

9. Procédé selon l'une quelconque des revendications précédentes, **caractérisé en ce qu'**une surface de la couche de recouvrement (3) est plus grande que la surface de la couche de support (9), de sorte que la couche de recouvrement (3) s'étend sur toute la circonférence de la couche de support (9) au-delà de la couche de support (9) sur la surface de la pièce de vaisselle (1).

10. Procédé selon l'une quelconque des revendications précédentes, **caractérisé en ce que** l'application de la couche de revêtement (3) comprend une impression de la couche de revêtement (3) ou un transfert de la couche de revêtement (3) sous la forme d'une image de transfert imprimée.

11. Procédé selon l'une quelconque des revendications précédentes, **caractérisé en ce que** plusieurs couches de revêtement (3) sont appliquées les unes au-dessus des autres.

12. Procédé selon l'une quelconque des revendications précédentes, **caractérisé en ce que** le support d'informations (2) est appliqué sur la couche de support (9) et enfoncé dans la couche de support (9) à l'aide d'un applicateur (11), l'applicateur (11) et la pièce de vaisselle (1) pouvant être déplacés l'un par rapport à l'autre, l'applicateur comprenant une caméra pour détecter une position de la couche de support (9) sur la pièce de vaisselle (1), un positionnement de l'applicateur (11) avec le support d'informations (2) par rapport à la pièce de vaisselle (1) étant effectué à l'aide d'une image produite par la caméra de la pièce de vaisselle (1) avec la couche de support (9).

13. Procédé selon l'une quelconque des revendications précédentes, **caractérisé en ce que** le support d'informations (2) est appliqué sur la couche de support (9) et enfoncé dans la couche de support (9) à l'aide d'un applicateur (11), l'applicateur (11) comprenant un dispositif de lecture et/ou d'écriture sans contact pour la lecture et/ou l'écriture du support d'informations.

14. Dispositif, comprenant
une pièce de vaisselle (1), qui est constituée d'un matériau qui est choisi dans un groupe constitué par le verre, la céramique et le plastique, ou
une combinaison de ceux-ci, une couche de support (9) appliquée sur une surface (8) de la pièce de vaisselle (1), un support d'information électronique (2) lisible sans contact appliqué sur une surface (12) de la couche de support (9) opposée à la surface (8) de la pièce de vaisselle (1), et
une couche de recouvrement (3) en encre d'imprimerie,
une surface de base du support d'informations (2) étant plus petite qu'une surface de la couche de support (9), et
la couche de recouvrement (3) recouvrant au moins par sections une surface (6) du support d'informations (2) opposée à la couche de support (9) et la surface (12) de la couche de support (9),
**caractérisé en ce que**
la couche de support (9) comprend un matériau déformable plastiquement,
le support d'informations (2) est enfoncé dans la couche de support (9) et
une surface de la couche de recouvrement (3) est plus grande que la surface de la couche de support (9), de sorte que la couche de recouvrement (3) s'étend sur toute la circonférence de la couche de support (9) au-delà de la couche de support (9) sur la surface (8) de la pièce de vaisselle (1).
